# EUROPÄISCHE PATENTSCHRIFT

(11) **EP 1 978 275 B1**
(45) Veröffentlichungstag und Bekanntmachung des Hinweises auf die Patenterteilung: **12.10.2011**
(21) Anmeldenummer: 08006251.6
(22) Anmeldetag: 31.03.2008
(51) Int. Cl.: F16F 1/387, F16F 3/087

(54) **Gelenklager, insbesondere an einem Drehgelenk zwischen einem Vorderwagen und Hinterwagen eines Gelenkbusses**
Pivot bearing, in particular on a swivel joint between a front wheel and a rear wheel of an articulated bus
Articulation, en particulier sur une plateforme pivotante entre un wagon avant et un wagon arrière d'un bus à plateforme pivotante

(30) Priorität: 07.04.2007 DE 102007016742
(43) Veröffentlichungstag der Anmeldung: 08.10.2008
(73) Patentinhaber: Jörn GmbH, 71336 Waiblingen (DE); Hübner GmbH, D-34123 Kassel (DE)
(72) Erfinder: Scharf, Lothar, 37242 Bad Sooden-Allendorf (DE); Koch, Robert, 37242 Bad Sooden-Allendorf (DE); Lippke, Oliver, 71686 Remseck (DE); Zawadzki, Bernd, 71409 Schwaikheim (DE)
(74) Vertreter: Liebl, Thomas

(56) Entgegenhaltungen:
- DE-A1- 2 337 872
- DE-C1- 4 215 627
- US-A- 2 051 864
- US-A- 3 730 462
- US-A- 5 439 203

## Beschreibung

Die Erfindung betrifft ein Gelenklager, insbesondere an einem Drehgelenk zwischen einem Vorderwagen und Hinterwagen eines Gelenkbusses nach dem Oberbegriff des Anspruchs 1.

Ein bekanntes gattungsgemäßes Gelenklager (DE-PS 23 37 872) weist eine zylindrische Gelenkbuchse auf, die aus einem Innenrohr, das auf einem Lagerbolzen als erstem Lagerteil verdrehfest aufgesteckt ist, und einem Außenrohr sowie wenigstens einer dazwischen festhaftend angebrachten Elastomerschicht besteht. Das Außenrohr hat einen Längsschlitz, der sich mit seiner Schlitztiefe in die Elastomerschicht hineinerstreckt. Das Gelenklager umfasst weiter ein Aufnahmeauge als zweites Lagerteil, in das die Gelenkbuchse mit ihrem im unbelasteten Zustand größeren Durchmesser unter Verringerung dieses Durchmessers mit radialer Vorspannung eingebracht ist, wobei sich der im unbelasteten Zustand der Gelenkbuchse mit einer entsprechenden Schlitzbreite ausgeführte Längsschlitz geschlossen hat.

Somit liegen im montierten Zustand im Schlitzbereich sowohl das Außenrohr, die Elastomerschicht und eventuelle Zwischenbleche aneinander und sind damit ringförmig geschlossendurchlaufend.

Alle Relativbewegungen zwischen dem Innenrohr als dem einen zu lagernden Teil und dem Aufnahmeauge als dem anderen zu lagernden Teil werden molekular ohne Gleitbewegungen im Elastomer aufgenommen. Durch den insgesamt ringförmigen zylindrischen Aufbau des gattungsgemäßen Gelenklagers, liegen in allen Raumrichtungen kontinuierliche Verhältnisse hinsichtlich der Steifigkeiten vor. Insbesondere ist ein solches Gelenklager als einziges Gelenklager zur Verbindung eines Drehgelenkes eines Gelenkbusses mit einem Vorderwagen oder Hinterwagen nicht geeignet

Weiter ist ein elastisches Lager mit einer Elastomermetallbuchse bekannt (DE 10 2004 062 807 A1) mit einem Innenrohr und darauf festhaftend durch jeweils radial gegenüberliegende Freiräume unterbrochenen Elastomerschichtschalen, welche in ein Aufnahmeauge unter Vorspannung eingepresst sind. Ein solches Lager ist u. a. für einen Einbau mit horizontaler Lagerachse in Verbindung mit einer Fahrwerklagerung an einem Fahrzeug geeignet, wobei relativ hohe Kräfte in Richtung der Elastomerschichtschalen aufgenommen werden können. In Querrichtung dazu ist die Lagersteifigkeit sehr gering, so dass zum Schutz des Lagers nach einem vorgegebenen Federweg stabile Anschlagpuffer vorgesehen sind. Somit hat ein solches Lager in unterschiedlichen Raumrichtungen zwar unterschiedliche Steifigkeiten, kann jedoch nicht für alle solche Eigenschaften erfordernden Lageraufgaben ausgelegt werden und ist insbesondere nicht als einzige Lagerstelle an einem Drehgelenk eines Gelenkbusses geeignet.

Aufgabe der Erfindung ist es, ein gattungsgemäßes Lager so weiterzubilden, dass bei relativ geringer Verdrehsteifigkeit und geringer Steifigkeit in Axialrichtung das Gelenklager quer zur Längsrichtung für eine hohe Kraftübertragung einerseits sehr steif ist und in einer dazu senkrechten Querrichtung andererseits relativ weich ist, wodurch insbesondere bei einer Verwendung als einziges Lager an einem Drehgelenk eines Gelenkbusses eine geeignete Schubkraftübertragung in Verbindung mit einer geeigneten Wank- und Nickabstützung möglich ist. Eine weitere Aufgabe der Erfindung ist es, einen Gelenkbus unter Verwendung des erfindungsgemäßen Gelenklagers vorzuschlagen.

Diese Aufgabe wird hinsichtlich des Gelenklagers mit den Merkmalen des Anspruchs 1 gelöst.

Gemäß Anspruch 1 ist zu beiden Stirnseiten der Gelenkbuchse und davon jeweils gering beabstandet eine erste und zweite Elastomermetallbuchse angeordnet, wobei das Aufnahmeauge axial die Gelenkbuchse und die beiden Elastomermetallbuchsen überdeckt. Jede der Elastomermetallbuchsen besteht aus einem Innenrohr mit darauf festhaftend durch jeweils radial gegenüberliegende Freiräume unterbrochenen Elastomerschichtschalen. Der Außendurchmesser der Elastomermetallbuchse im Herstellzustand an den Elastomerschichtbereichen weist ein Übermaß gegenüber dem zugeordneten Innendurchmesser des Aufnahmeauges auf. Die Elastomermetallbuchse ist im montierten Zustand unter Vorspannung in den Elastomerschichtschalen ins Aufnahmeauge eingebracht und das Innenrohr ist auf dem gemeinsamen Lagerbolzen verdrehfest aufgesteckt. Zudem sind die Elastomerschichtschalen der beiden Elastomermetallbuchsen in einer gleichen axialen Längsebene ausgerichtet.

Ein solches Gelenklager ist relativ verdrehweich und ebenso in der Axialrichtung wegen der Schubbeanspruchung der Elastomerschichten relativ weich. Es können dagegen in Querrichtung bei hoher Steifigkeit in Richtung der in einer gleichen Längsebene liegenden Elastomerschichtschalen einerseits hohe Kräfte übertragen werden, wobei in einer senkrechten Richtung dazu die Steifigkeit geringer ist. Damit werden insbesondere kardanische Belastungen in den unterschiedlichen Raumrichtungen entsprechend unterschiedlich aufgenommen und abgestützt. Dadurch ist ein solches Gelenklager besonders als einzige Lagerverbindung an einem Drehgelenk eines Gelenkbusses hervorragend geeignet, wie dies in Verbindung mit Anspruch 12 weiter erläutert wird.

In einer konkreten Ausführung nach Anspruch 2 weist die mittlere Gelenkbuchse zusätzlich zu einem metallischen, dickwandigen Innenrohr und einem dagegen dünnwandigen, metallischen Außenblech wenigstens ein weiteres längsgeschlitztes koaxiales Zwischenblechrohr in der Elastomerschicht auf, wodurch die Spannung in der Elastomerschicht gleichmäßiger verteilt und die Lebensdauer erhöht wird. In einer weiteren gleichgerichteten Maßnahme durch Anspruch 3 nimmt die axiale Länge der Elastomerschicht sowie des wenigstens einen Zwischenblechrohrs und des Außenblechrohrs in Radialrichtung ab.

Nach Anspruch 4 kann das Innenrohr wenigstens einer der beiden Elastomermetallbuchsen als durchgehend geschlossenes Zylinderrohr ausgebildet sein. In einer anderen alternativen Ausführungsform nach Anspruch 5 kann wenigstens eine der Elastomermetallbuchsen zweiteilig mit einem Innenrohr aus zwei halbkreisförmigen Halbschalen ausgebildet sein, wobei auf jeder der zwei Halbschalen Elastomerschichtschalen angebracht sind. Entsprechend kann je nach den Gegebenheiten auch die mittlere Gelenkbuchse aus zwei Halbschalen gebildet sein, wobei dann an den Halbschalenlängsrändern zweckmäßig die Längsschlitze ausgeführt sind.

Die Elastomerschichtschalen bestehen nach Anspruch 6 aus der Elastomerschicht und einer Außenblechschale sowie vorzugsweise wenigstens einer Zwischenblechschale in der Elastomerschicht. Eine Dimensionierung und Anpassung an konkrete Gegebenheiten kann durch Variation der Schichtdicken und ebenso durch eine Variation der in Umfangsrichtung gesehenen Schalenbreiten vorgenommen werden, wobei zweckmäßig die einzelnen Schalenbreiten für einen konkreten Fall gleich gewählt werden.

Die Gelenkbuchse und die Elastomermetallbuchsen müssen auf dem Lagerbolzen verdrehfest angebracht sein. Dazu können diese nach Anspruch 7 verdrehfest aufgepresst sein und/oder durch einen formschlüssigen Verbindungseingriff verdrehfest und dabei ggf auch axial fixiert werden. Ein solcher formschlüssiger Verbindungseingriff kann beispielsweise in bekannter Art durch Stifte oder Nasen in Verbindung mit entsprechenden Ausnehmungen erfolgen.

Die Gelenkbuchse und die beiden Elastomermetallbuchsen sind zudem auch ortsfest bezüglich des Aufnahmeauges zu montieren, um bei allen Betriebsbedingungen gleitende, verschleißerzeugende Relativbewegungen auszuschließen. Dazu wird in einer Ausführungsform gemäß Anspruch 8 ein durchgehend am Umfang geschlossenes Aufnahmeauge verwendet, in welches die Gelenkbuchse und die beiden Elastomermetallbuchsen axial unter Vorspannung eingepresst sind. Eine hohe radiale Vorspannung verhindert dabei gleitende Relativbewegungen an den Anlageflächen zum Aufnahmeauge, wobei ggf. in an sich bekannter Weise dort durch Gummifilmauflagen die Reibung weiter erhöht werden kann. Zudem können auch an dieser Anlagefläche formschlüssige Verbindungseingriffe, ähnlich wie in Anspruch 7, vorgesehen werden.

Alternativ zu einem durchgehend geschlossenen Aufnahmeauge, wird mit Anspruch 9 ein Aufnahmeauge aus wenigstens zwei unter Durchmesserverringerung zusammenspannbaren Aufnahmeschalenteilen vorgeschlagen. Somit wird hier bei der Montage vorzugsweise durch Verwendung von Spannschrauben eine Vorspannung in der Gelenkbuchse und den beiden Elastomermetallbuchsen aufgebracht werden, die u. a. die Lage gegen Gleitbewegungen, ggf. in Verbindung mit formschlüssigen Eingriffen, sichert.

Gemäß Anspruch 10 soll jeweils zwischen einer Stirnseite der Gelenkbuchse und einer angrenzenden Elastomermetallbuchse ein an der Innenseite des Aufnahmeauges anliegender Abstandsring und/oder ein auf dem Lagerbolzen aufgesteckter Abstandsring angeordnet werden. Dies ist insbesondere erforderlich bei der Verwendung eines durchgehend am Umfang geschlossenen Aufnahmeauges, um beim Einpressen den vorgegebenen axialen Abstand zwischen der Gelenkbuchse und den Elastomermetallbuchsen einhalten zu können.

Alternativ dazu kann mit entsprechender Abstützfunktion das Außenblechrohr der Gelenkbuchse zur Ausbildung von integrierten Abstandsringen beidseitig axial verlängert werden, oder es können die Außenblechschalen der Elastomermetallbuchsen zur Ausbildung von integrierten Abstandsringteilen jeweils axial zur benachbarten Stirnseite der Gelenkbuchse hin verlängert werden.

Zudem können nach Anspruch 11 als axiale Lagesicherung und ggf. bei entsprechender Formung als Verdrehsicherung im Bereich der axial lageräußeren Stirnseiten der Elastomermetallbuchsen Sicherungsringe angebracht sein. Zum gleichen Zweck kann auch der axial äußere Rand des Aufnahmeauges zumindest in Teilbereichen nach radial innen umgebördelt werden. Auch die Außenblechschalen der Elastomermetallbuchsen können stirnseitig zumindest in Teilbereichen in Fasen am Aufnahmeauge nach radial außen aufgebördelt werden.

Die Aufgabe der Erfindung wird hinsichtlich des Gelenkbusses mit den Merkmalen des Anspruchs 12 gelöst.

Gemäß Anspruch 12 weist ein Gelenkbus einen Vorderwagen und einen Hinterwagen sowie einen Drehgelenk auf, der mit einem der beiden Wagenteile, vorzugsweise mit dem angetriebenen Hinterwagen fest verbunden ist. Der Drehgelenk ist mit dem anderen Wagen, vorzugsweise dem nicht angetriebenen Vorderwagen, über das erfindungsgemäße Gelenklager als einzigem Lagerpunkt verbunden. Das Gelenklager ist dabei in der Längsmitte des Gelenkbusses angeordnet, wobei die Gelenklagerachse horizontal in einer Fahrzeugquerebene liegt und die Elastomerschichtschalen der beiden Elastomermetallbuchsen in Fahrtrichtung ausgerichtet sind. Je nach den konstruktiven Gegebenheiten kann dabei der Lagerbolzen am Drehgelenk und das Aufnahmeauge am Wagenteil oder umgekehrt angebracht sein.

Bisher war es bekannt, ein solches Drehgelenk eines Gelenkbusses mit dem Hinterwagen fest zu verbinden und eine elastische Verbindung mit dem Vorderwagen durch zwei getrennte, in einer Querebene in gegenüberliegenden Seitenbereichen weit auseinanderliegende Gelenklager herzustellen, die zusätzlich zur Übertragung der Schubkraft vom Hinterwagen auf den Vorderwagen Wank- und Nickbewegungen aufgenommen und abgestützt haben. Mit dem erfindungsgemäßen Gelenklager und dessen Anordnung in der Längsmitte des Gelenkbusses ist es möglich, die erforderliche Kraftübertragung und Abstützfunktion an nur einer Stelle mit dem erfindungsgemäßen Gelenklager durchzuführen und damit einen Lagerpunkt einzusparen.

Anhand einer Zeichnung wird die Erfindung näher erläutert.

Es zeigen:
- Fig. 1: eine Draufsicht in Axialrichtung auf ein fertig montiertes Gelenklager,
- Fig. 2: eine teilweise geschnittene Seitenansicht des Gelenklagers nach Fig. 1,
- Fig. 3: einen Längsschnitt durch eine mittlere Gelenkbuchse im Herstellzustand,
- Fig. 4: eine Ansicht in Radialrichtung auf die Gelenkbuchse nach Fig. 3,
- Fig. 5: eine Seitenansicht einer der beiden Elastomermetallbuchsen der ersten Ausführungsform im Herstellzustand,
- Fig. 6: eine Draufsicht in Axialrichtung auf die Elastomermetallbuchse nach Fig. 5,
- Fig. 7: eine Draufsicht in Axialrichtung auf ein montiertes Gelenklager einer zweiten Ausführungsform, und
- Fig. 8: eine teilweise geschnittene Seitenansicht des Gelenklagers nach Fig. 7.

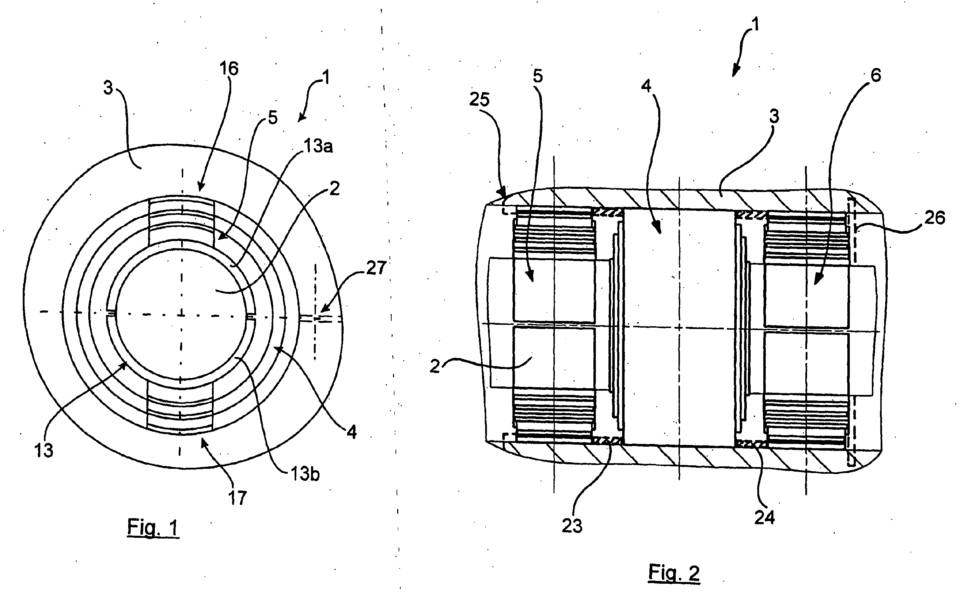

In den Figuren 1 und 2 sind Ansichten eines Gelenklagers 1 einer ersten Ausführungsform dargestellt, mit einem zentralen Lagerbolzen 2 als erstem Lagerteil und einem Aufnahmeauge 3 als zweitem Lagerteil, wobei das Aufnahmeauge am hinteren Ende des Vorderwagens eines Gelenkbusses in einer Querebene mit horizontaler Achse angebracht ist. Der Lagerbolzen 2 ist Bestandteil eines anschließenden Drehgelenkes, der mit dem angetriebenen Hinterwagen des Gelenkbusses fest verbunden ist.

Auf dem Lagerbolzen 2 sind eine mittlere Gelenkbuchse 4 sowie beidseitig beabstandet eine erste und zweite gleich aufgebaute Elastomermetallbuchse 5 und 6 verdrehfest angeordnet.

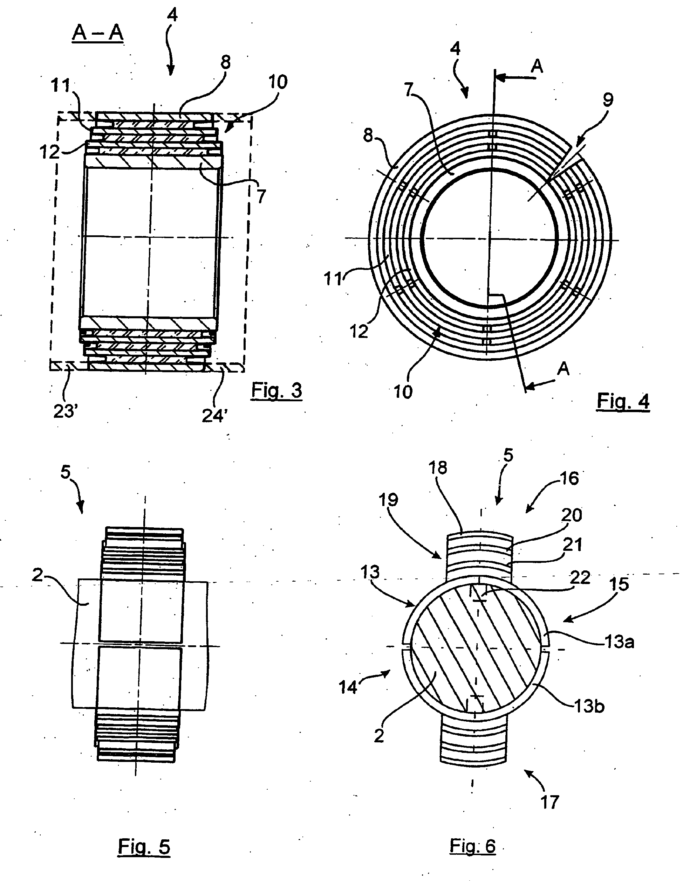

Der Aufbau der Gelenkbuchse 4 wird anhand der Figuren 3 und 4 näher erläutert: Die Gelenkbuchse 4 besteht aus einem stabilen metallischen Innenrohr 7 und einem dagegen dünnwandigeren Außenblechrohr 8, das im Herstellzustand einen Längsschlitz 9 aufweist, der sich V-förmig durch eine zwischen Innenrohr 7 und Außenblechrohr 8 liegende Elastomerschicht 10 bis zum Innenrohr 7 erstreckt. In der Elastomerschicht 10 sind zudem koaxial sowie radial gegeneinander versetzt zwei längs geschlitzte Zwischenblechrohre 11,12 eingebettet.

Im fertig montierten Zustand entsprechend Fig. 1 und Fig. 2 ist die Gelenkbuchse 4 mit ihrem Innenrohr 7 verdrehfest auf den Lagerbolzen 2 aufgepresst. Zudem ist die Gelenkbuchse mit ihrem im Herstellzustand größeren Durchmesser unter Verringerung dieses Durchmessers mit radialer Vorspannung in das Aufnahmeauge 3 eingebracht, wobei unter Verringerung des Durchmessers der Gelenkbuchse 4 der Längsschlitz 9 geschlossen ist.

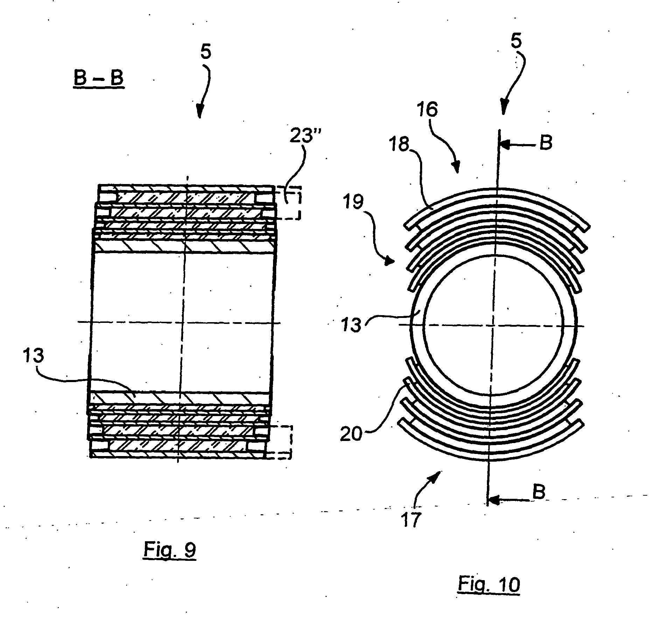

Der jeweils gleiche Aufbau der Elastomermetallbuchsen 5, 6 wird anhand der Darstellungen im Herstellzustand entsprechend Fig. 5 und Fig. 6 nähert erläutert: Jede der Elastomermetallbuchsen 5, 6 besteht aus einem Innenrohr 13 mit darauf festhaftend durch jeweils radial gegenüberliegende Freiräume 14, 15 unterbrochene Elastomerschichtschalen 16, 17. Diese Elastomerschichtschalen 16, 17 weisen jeweils eine Außenblechschale 18 sowie zwei in der Elastomerschicht 19 eingebettete Zwischenblechschalen 20, 21 auf. Die Elastomerschichtschalen 16, 17 haben in der vorliegenden Ausführungsform in Umfangsrichtung gesehen eine relativ geringe Breite, bzw, sind die Freiräume 14, 15 relativ groß, so dass die Elastomerschichtschalen 16, 17 etwa die Form gegenüberliegender Elastomermetallblöcke haben (in der Ausführungsform entsprechend Fig. 10 ist dagegen die Breite der Elastomerschichtschalen größer, so dass diese das Innenrohr weiter übergreifen und die Schalenform deutlicher sichtbar ist).

Das Innenrohr 13 ist hier zweiteilig durch zwei halbkreisförmige Halbschalen 13a, 13b ausgebildet, wobei auf jeder der zwei Halbschalen 13a, 13b entsprechend die Elastomerschichtschalen 16, 17 angebracht sind.

Die beiden Elastomermetallbuchsen 5, 6 sind mit ihrem Innenrohr 13 bzw. den beiden Halbschalen 13a, 13b verdrehfest auf den Lagerbolzen 2 aufgesetzt, wobei in Fig. 6 schematisch und strichliert ein formschlüssiger Eingriff 22 für eine Verdrehsicherung und axiale Sicherung eingezeichnet ist. Im Herstellzustand (Fig. 5, Fig. 6) hat jede der Elastomermetallbuchsen 5, 6 im Bereich der Elastomerschichtschalen 16, 17 ein Übermaß gegenüber dem Innendurchmesser des Aufnahmeauges 3. Die Elastomermetallbuchsen 5, 6 sind in den Figuren 1 und 2 im fertig montierten Zustand unter Vorspannung in den Elastomerschichtschalen 16, 17 ebenso wie die Gelenkbuchse 4 ins Aufnahmeauge 3 verdrehfest axial eingepresst.

Damit beim axialen Einpressvorgang ins Aufnahmeauge 3 sowie im weiteren Betrieb der Abstand zwischen der Gelenkbuchse 4 und den Elastomermetallbuchsen 5, 6 eingehalten wird, können die schematisch gezeichneten Abstandsringe 23, 24 eingesetzt werden. Als weitere Sicherungselemente gegen ein Verdrehen der Gelenkbuchse 4 oder der Elastomerschichtschalen 16, 17 oder gegen ein axiales Auswandern aus dem Aufnahmeauge 3 kann dieses stirnseitig mit schematisch strichliert eingezeichneten Haltenasen 25 nach radial innen umgebördelt werden oder stirnseitige Sicherungsringe 26 eingesetzt sein.

Für den Fall, dass das Aufnahmeauge 3 durchgehend im Umfang geschlossen ist, müssen die Gelenkbuchse sowie die beiden Elastomermetallbuchsen axial unter Vorspannung eingepresst werden. Es ist jedoch auch möglich, wie an der Stelle 27 rechts in Fig. 1 am Aufnahmeauge 3 einseitig angedeutet, dieses zweiteilig zusammenspannbar auszuführen. Dadurch kann ggf. die Montage einfacher gestaltet werden und ggf. kann auch auf die Abstandsringe 23, 24 verzichtet werden.

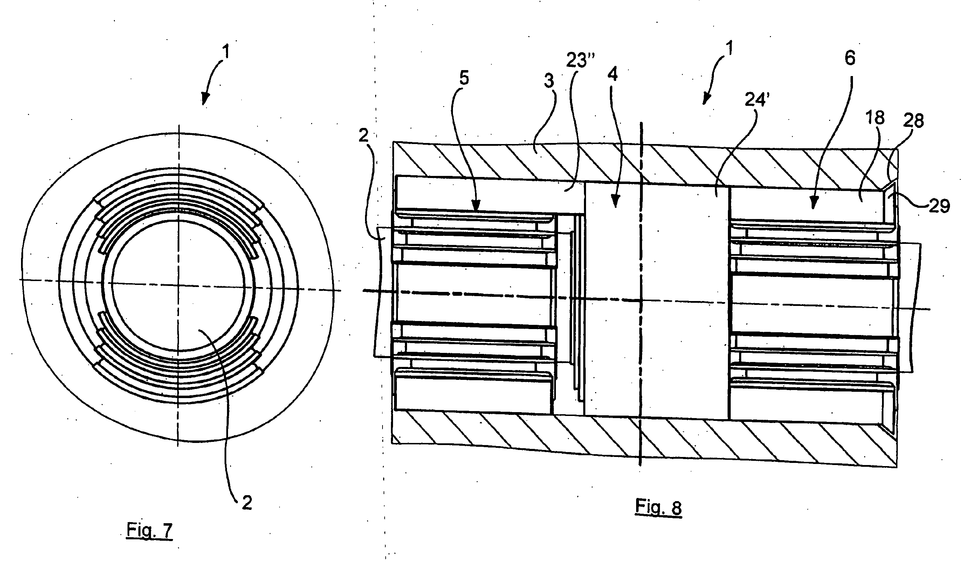

In den Figuren 7 und 8 ist eine ähnliche alternative Ausführungsform eines Gelenklagers 1 im montierten Zustand wie in den Figuren 1 und 2 gezeigt, wobei gleiche Gegenstände mit gleichen Bezugszeichen versehen sind. Auch hier ist auf einem Lagerbolzen 2 eine Gelenkbuchse 4 sowie beidseitig je eine Elastomermetallbuchse 5, 6 aufgepresst, die zusammen in ein Aufnahmeauge 3 unter Vorspannung in ihren Gummischichten eingepresst sind. Die Gelenkbuchse 4 ist hier genau gleich der Gelenkbuchse 4 in der ersten Ausführungsform. Der Unterschied zwischen der vorliegenden zweiten Ausführungsform und der ersten Ausführungsform liegt im wesentlichen in den Elastomermetallbuchsen 5, 6, von denen eine in den Figuren 9 und 10 im Herstellzustand gezeigt ist:

Auch hier weist die Elastomermetallbuchse 5 ein Innenrohr 13 auf, welches jedoch am Umfang durchgehend geschlossen ist. Zudem sind auch hier gegenüberliegend Elastomerschichtschalen 16, 17 mit einer Außenblechschale 18 einer Elastomerschicht 19 und drei Zwischenblechschalen 20 auf dem Innenrohr 13 festhaftend angebracht. Im Vergleich zur ersten Ausführungsform (Fig. 6) sind hier jedoch wie aus Fig. 10 ersichtlich, die Elastomerschichtschalen 16, 17 für eine Anpassung an andere Gegebenheiten deutlich breiter ausgebildet.

Weiter sind unterschiedliche Ausführungsformen hinsichtlich der gegenseitigen Abstützung und Fixierung gemeinsam in Fig. 8 dargestellt:

Dabei ist im unteren linken Quadranten von Fig. 8 eine Ausführungsform dargestellt, bei der im ganzen Gelenklager keine gegenseitigen Abstandshalter, wie beispielsweise die Abstandsringe 23, 24 aus Fig. 2 verwendet sind.

Alternativ ist im oberen linken Quadranten von Fig. 8 eine Ausführungsform dargestellt, bei der die Funktion der Abstandsringe 23, 24 aus Fig. 2, hier als Abstandsringteil 23" dargestellt, jeweils in den Außenblechschalen 18 durch deren axiale Verlängerung zur benachbarten Stirnseite der Gelenkbuchse 4 integriert ist. Am Herstellteil nach Fig. 9 sind die Abstandsringteile 23" strichliert eingezeichnet.

Alternativ dazu ist in der rechten Hälfte von Fig. 8 eine Ausführungsform dargestellt, bei der die Funktion der Abstandsringe 23', 24' des Außenblechrohrs 8 integriert ist, wie dies als Alternative strichliert am Herstellteil nach Fig. 3 gezeichnet ist. Zudem sind hier als axiale Lagesicherung die Außenblechschalen 18 der Elastomermetallbuchse 6 in eine stirnseitige Fase am Aufnahmeauge 3 nach radial außen mit einem Bördelrand aufgebördelt.

## Patentansprüche

1. Gelenklager, insbesondere an einem Drehgelenk zwischen einem Vorderwagen und Hinterwagen eines Gelenkbusses,
mit einer zylindrischen Gelenkbuchse (4) bestehend aus einem Innenrohr (7), das auf einen Lagerbolzen (2) als erstem Lagerteil verdrehfest aufgesteckt ist, und einem Außenrohr (8) und wenigstens einer dazwischen festhaftenden Elastomerschicht (10), wobei das Außenrohr (8) wenigstens einen Längsschlitz (9) aufweist, der sich mit seiner Schlitztiefe in die Elastomerschicht (10) hinein erstreckt, und
mit einem Aufnahmeauge (3) als zweitem Lagerteil, in das die Gelenkbuchse (4) mit ihrem im unbelasteten Zustand größeren Durchmesser unter Verringerung dieses Durchmessers mit radialer Vorspannung eingebracht ist und sich dabei der im unbelasteten Zustand der Gelenkbuchse (4) mit einer entsprechenden Schlitzbreite ausgeführte Längsschlitz (9) geschlossen hat,
**dadurch gekennzeichnet,**
**dass** zu beiden Stirnseiten der Gelenkbuchse (4) und davon gering beabstandet jeweils eine erste und zweite Elastomermetallbuchse (5, 6) angeordnet ist,
**dass** das Aufnahmeauge (3) axial die Gelenkbuchse (4) und die beiden Elastomermetallbuchsen (5, 6) überdeckt,
**dass** jede der Elastomermetallbuchsen (5, 6) aus einem Innenrohr (13) mit darauf festhaftend durch jeweils radial gegenüberliegende Freiräume (14, 15) unterbrochen Elastomerschichtschalen (16, 17) besteht, wobei der Außendurchmesser der Elastomermetallbuchse (5, 6) im Herstellzustand an den Elastomerschichtbereichen ein Übermaß gegenüber dem zugeordneten Innendurchmesser des Aufnahmeauges (3) aufweist und die Elastomermetallbuchse (5, 6) im montierten Zustand unter Vorspannung in den Elastomerschichtschalen (16, 17) ins Aufnahmeauge (3) eingebracht sowie das Innenrohr (13) auf den Lagerbolzen (2) verdrehfest aufgesteckt ist, und
**dass** die Elastomerschichtschalen (16, 17) der beiden Elastomermetallbuchsen (5, 6) in einer gemeinsamen Längsebene liegen.

2. Gelenklager nach Anspruch 1, **dadurch gekennzeichnet, dass** die Gelenkbuchse (4) zusätzlich zu einem metallischen dickwandigen Innenrohr (7) und einem dagegen dünnwandigen, metallischen Außenblechrohr (8) wenigstens ein weiteres, längsgeschlitztes koaxiales Zwischenblechrohr (11, 12) in der Elastomerschicht (10) aufweist.

3. Gelenklager nach Anspruch 2, **dadurch gekennzeichnet, dass** die axiale Länge der Elastomerschicht (10) sowie des wenigstens einen Zwischenblechrohrs (11, 12) und des Außenblechrohrs (8) in Radialrichtung abnimmt.

4. Gelenklager nach einem der Ansprüche 1 bis 3, **dadurch gekennzeichnet, dass** das Innenrohr (13) wenigstens einer Elastomermetallbuchse (5, 6) als durchgehendes geschlossenes Zylinderrohr ausgebildet ist.

5. Gelenklager nach einem der Ansprüche 1 bis 3, **dadurch gekennzeichnet, dass** wenigstens eine der Elastomermetallbuchsen (5, 6) zweiteilig mit einem Innenrohr (13) aus zwei halbkreisförmigen Halbschalen (13a, 13b) ausgebildet ist, wobei auf jeder der zwei Halbschalen (13a, 13b) Elastomerschichtschalen (16, 17) angebracht sind.

6. Gelenklager nach einem der Ansprüche 1 bis 5, **dadurch gekennzeichnet, dass** die Elastomerschichtschalen (16, 17) eine Außenblechschale (18) und vorzugsweise wenigstens eine Zwischenblechschale (20, 21) in der Elastomerschicht (19) aufweisen.

7. Gelenklager nach einem der Ansprüche 1 bis 6, **dadurch gekennzeichnet, dass** das Innenrohr (7) der Gelenkbuchse (4) und die Innenrohre (13) der Elastomermetallbuchsen (5, 6) auf den Lagerbolzen (2) verdrehfest aufgepresst und/oder durch einen formschlüssigen Verbindungseingriff (22) verdrehfest und axial fixierbar sind.

8. Gelenklager nach einem der Ansprüche 1 bis 7, **dadurch gekennzeichnet, dass** das Aufnahmeauge (3) durchgehend im Umfang geschlossen ist und die Gelenkbuchse (4) sowie die beiden Elastomermetallbuchsen (5, 6) axial unter Vorspannung eingepresst sind.

9. Gelenklager nach einem der Ansprüche 1 bis 7, **dadurch gekennzeichnet, dass** das Aufnahmeauge (3) aus wenigstens zwei, unter Durchmesserverringerung zusammenspannbaren Aufnahmeschalenteilen (27) besteht.

10. Gelenklager nach einem der Ansprüche 1 bis 9, **dadurch gekennzeichnet, dass** jeweils zwischen einer Stirnseite der Gelenkbuchse (4) und einer angrenzenden Elastomermetallbuchse (5, 6) ein an der Innenseite des Aufnahmeauges (3) anliegender Abstandsring (23, 24) und/oder ein auf den Lagerbolzen (3) aufgesteckter Abstandsring angeordnet ist, oder
dass mit entsprechender Abstützfunktion das Außenblechrohr (8) der Gelenkbuchse (4) zur Ausbildung von integrierten Abstandsringen (23', 24') beidseitig axial verlängert ist, oder
dass mit entsprechender Abstützfunktion die Außenblechschalen (18) der Elastomermetallbuchsen (5, 6) zur Ausbildung von integrierten Abstandsringteilen (23") jeweils axial zur benachbarten Stirnseite der Gelenkbuchse (4) hin verlängert sind.

11. Gelenklager nach einem der Ansprüche 1 bis 10, **dadurch gekennzeichnet, dass** als axiale Lagesicherung und ggf. als Verdrehsicherung im Bereich der axial äußeren Stirnseiten der Elastomermetallbuchsen (5, 6) Sicherungsringe (26) angebracht sind und/oder dort das Aufnahmeauge (3) zumindest in Teilbereichen nach radial innen umgebördelt (25) ist und/oder die Außenblechschalen (18) der Elastomermetallbuchsen (5, 6) dort zumindest in Teilbereichen in Fasen am Aufnahmeauge (3) nach radial außen aufgebördelt sind.

12. Gelenkbus mit einem Gelenklager nach einem der Ansprüche 1 bis 11, **dadurch gekennzeichnet, dass** der Gelenkbus einen Vorderwagen und einen Hinterwagen aufweist und ein Drehgelenk mit einem der beiden Wagenteile fest verbunden ist,
dass der andere Wagenteil in der Längsmitte des Gelenkbusses über das Gelenklager (1) mit dem Drehgelenk verbunden ist, wobei die Gelenklagerachse horizontal in einer Fahrzeugquerebene liegt und die Elastomerschichtschalen (16, 17) der beiden Elastomermetallbuchsen (5, 6) in Fahrtrichtung ausgerichtet sind.

## Claims

1. Pivot bearing, in particular on a rotary joint between a forward vehicle and a rear vehicle of an articulated bus,
having a cylindrical pivot bush (4) consisting of an inner tube (7), which is plugged in a rotationally fixed manner as first bearing part onto a bearing pin (2), and an outer tube (8) and at least one elastomer layer (10) securely adhering in between, wherein the outer tube (8) has at least one longitudinal slot (9), the slot depth of which extends into the elastomer layer (10), and
having as second bearing part a receiving eye (3), into which is introduced the pivot bush (4), which has a diameter which is greater in the unloaded state, with this diameter being reduced by radial preloading, and as a result the longitudinal slot (9), which is designed with a corresponding slot width in the unloaded state of the pivot bush (4), has been closed,
**characterized**
**in that** at the two end sides of the pivot bush (4) and spaced apart slightly therefrom there is arranged in each case a first and a second elastomeric metallic bush (5, 6),
**in that** the receiving eye (3) axially covers the pivot bush (4) and the two elastomeric metallic bushes (5, 6),
**in that** each of the elastomeric metallic bushes (5, 6) consists of an inner tube (13) with elastomer layer shells (16, 17) securely adhering thereto, said elastomer layer shells (16, 17) being interrupted by in each case radially opposite clearances (14, 15), wherein the outside diameter of the elastomeric metallic bushes (5, 6) is oversized in the manufactured state in the regions of the elastomer layer in comparison with the associated inside diameter of the receiving eye (3) and the elastomeric metallic bush (5, 6) is introduced into the receiving eye (3) in the fitted state under preloading in the elastomer layer shells (16, 17) and the inner tube (13) is plugged in a rotationally fixed manner onto the bearing pin (2), and
**in that** the elastomer layer shells (16, 17) of the two elastomeric metallic bushes (5, 6) lie in a common longitudinal plane.

2. Pivot bearing according to Claim 1, **characterized in that** the pivot bush (4) has, in addition to a metallic, thick-walled inner tube (7) and an, in contrast thereto, thin-walled metallic outer sheet-metal tube (8), at least one further, longitudinally slotted coaxial intermediate sheet-metal tube (11, 12) in the elastomer layer (10).

3. Pivot bearing according to Claim 2, **characterized in that** the axial length of the elastomer layer (10) and of the at least one intermediate sheet-metal tube (11, 12) and the outer sheet-metal tube (8) decreases in the radial direction.

4. Pivot bearing according to one of Claims 1 to 3, **characterized in that** the inner tube (13) of at least one elastomeric metallic bush (5, 6) is formed as a continuous, closed cylindrical tube.

5. Pivot bearing according to one of Claims 1 to 3, **characterized in that** at least one of the elastomeric metallic bushes (5, 6) is formed in two parts with an inner tube (13) made of two semicircular half shells (13a, 13b), wherein elastomer layer shells (16, 17) are fitted on each of the two half shells (13a, 13b).

6. Pivot bearing according to one of Claims 1 to 5, **characterized in that** the elastomer layer shells (16, 17) have an outer sheet-metal shell (18) and preferably at least one intermediate sheet-metal shell (20, 21) in the elastomer layer (19).

7. Pivot bearing according to one of Claims 1 to 6, **characterized in that** the inner tube (7) of the pivot bush (4) and the inner tubes (13) of the elastomeric metallic bushes (5, 6) are pressed in a rotationally fixed manner onto the bearing pin (2) and/or can be fixed in a rotationally fixed and axial manner by a form-fitting connecting engagement (22).

8. Pivot bearing according to one of Claims 1 to 7, **characterized in that** the receiving eye (3) is continuously closed circumferentially and the pivot bush (4) and the two elastomeric metallic bushes (5, 6) are pressed in axially under preloading.

9. Pivot bearing according to one of Claims 1 to 7, **characterized in that** the receiving eye (3) consists of at least two receiving shell parts (27) which can be clamped together with reduction in diameter.

10. Pivot bearing according to one of Claims 1 to 9, **characterized in that** a spacer ring (23, 24) that bears against the inner side of the receiving eye (3) and/or a spacer ring that is plugged onto the bearing pin (3) is arranged in each case between an end side of the pivot bush (4) and an adjacent elastomeric metallic bush (5, 6), or
**in that**, with a corresponding supporting function, the outer sheet-metal tube (8) of the pivot bush (4) is prolonged axially on both sides to form integrated spacer rings (23', 24'), or
**in that**, with a corresponding supporting function, the outer sheet-metal shells (18) of the elastomeric metallic bushes (5, 6) are prolonged in each case axially towards adjacent end sides of the pivot bushes (4) in order to form integrated spacer ring parts (23'').

11. Pivot bearing according to one of Claims 1 to 10, **characterized in that** securing rings (26) are fitted as axial positional securing means and optionally as rotational securing means in the region of the axially outer end sides of the elastomeric metallic bushes (5, 6) and/or the receiving eye (3) is flanged (25) radially inwards there at least in subregions and/or the outer sheet-metal shells (18) of the elastomeric metallic bushes (5, 6) are flanged radially outwards there at least in subregions in chamfers on the receiving eye (3).

12. Articulated bus having a pivot bearing according to one of Claims 1 to 11, **characterized in that** the articulated bus has a forward vehicle and a rear vehicle and a rotary joint is firmly connected to one of the two vehicle parts,
**in that** the other vehicle part is connected to the rotary joint via the pivot bearing (1) in the longitudinal centre of the articulated bus, wherein the pivot bearing axis lies horizontally in a transverse plane of the vehicle and the elastomer layer shells (16, 17) of the two elastomeric metallic bushes (5, 6) are oriented in the direction of travel.

## Revendications

1. Articulation, en particulier sur une plateforme pivotante entre un wagon avant et un wagon arrière d'un bus à plateforme pivotante, présentant
une douille articulée cylindrique (4) se composant d'un tube intérieur (7) qui est enfiché de manière solidaire en rotation sur un boulon de palier (2) en guise de première partie de palier, et d'un tube extérieur (8) et au moins d'une couche élastomère (10) adhérant au milieu, le tube extérieur (8) présentant au moins une fente longitudinale (9), dont la profondeur s'étend dans la couche élastomère (10), et
un oeil de réception (3) en en tant que seconde partie de palier, dans lequel la douille articulée (4) avec son diamètre supérieur à l'état non chargé est introduite en réduisant ce diamètre avec une précontrainte radiale et la fente longitudinale (9) réalisée à l'état non chargé de la douille articulée (4) avec une largeur de fente correspondante s'est fermée,
**caractérisée en ce que**
respectivement une première et une seconde douilles métalliques et en élastomère (5, 6) sont agencées des deux côtés frontaux de la douille articulée (4) et à faible distance de celle-ci,
l'oeil de réception (3) recouvre axialement la douille articulée (4) et les deux douilles métalliques et en élastomère (5, 6),
chacune des douilles métalliques et en élastomère (5, 6) se compose d'un tube intérieur (13) avec des coques de couche d'élastomère (16, 17) adhérant dessus et interrompues par des espaces libres respectifs (14, 15) radialement opposés, le diamètre extérieur de la douille métallique et en élastomère (5, 6) à l'état de fabrication présentant sur les zones de couche d'élastomère un surdimensionnement par rapport au diamètre intérieur associé de l'oeil de réception (3) et la douille métallique et en élastomère (5, 6) étant introduite à l'état monté sous précontrainte dans les coques de couche d'élastomère (16, 17) dans l'oeil de réception (3), et le tube intérieur (13) étant enfiché de manière solidaire en rotation sur le boulon de palier (2), et
les coques de couche d'élastomère (16, 17) des deux douilles métalliques et en élastomère (5, 6) se situent dans un plan longitudinal commun.

2. Articulation selon la revendication 1, **caractérisée en ce que** la douille articulée (4) présente, outre un tube intérieur (7) métallique à paroi épaisse et un tube de tôle extérieur (8) métallique en revanche à paroi mince, au moins un autre tube de tôle intermédiaire (11, 12) coaxial, fendu dans la longueur, dans la couche d'élastomère (10).

3. Articulation selon la revendication 2, **caractérisée en ce que** la longueur axiale de la couche d'élastomère (10) ainsi que d'au moins un tube de tôle intermédiaire (11, 12) et du tube de tôle extérieur (8) se réduit dans le sens radial.

4. Articulation selon l'une quelconque des revendications 1 à 3, **caractérisée en ce que** le tube intérieur (13) au moins d'une douille métallique et en élastomère (5, 6) est réalisé comme un tube cylindrique fermé et continu.

5. Articulation selon l'une quelconque des revendications 1 à 3, **caractérisée en ce qu'**au moins l'une des douilles métalliques et en élastomère (5, 6) est réalisée en deux parties avec un tube intérieur (13) composé de deux demi-coques (13a, 13b) semi-circulaires, des coques de couche d'élastomère (16, 17) étant montées sur chacune des deux demi-coques (13a, 13b).

6. Articulation selon l'une quelconque des revendications 1 à 5, **caractérisée en ce que** les coques de couche d'élastomère (16, 17) présentent une coque de tôle extérieure (18) et de préférence au moins une coque de tôle intermédiaire (20, 21) dans la couche d'élastomère (19).

7. Articulation selon l'une quelconque des revendications 1 à 6, **caractérisée en ce que** le tube intérieur (7) de la douille articulée (4) et les tubes intérieurs (13) des douilles métalliques et en élastomère (5, 6) sont emmanchés par pression de manière solidaire en rotation sur le boulon de palier (2) et/ou peuvent être fixés de manière axiale et solidaire en rotation par un engagement de liaison (22) positif.

8. Articulation selon l'une quelconque des revendications 1 à 7, **caractérisée en ce que** l'oeil de réception (3) est fermé en continu sur la périphérie et la douille articulée (4) ainsi que les deux douilles métalliques et en élastomère (5, 6) sont enfoncées axialement sous précontrainte.

9. Articulation selon l'une quelconque des revendications 1 à 7, **caractérisée en ce que** l'oeil de réception (3) se compose d'au moins deux parties de coque de réception (27) pouvant être serrées ensemble en diminuant le diamètre.

10. Articulation selon l'une quelconque des revendications 1 à 9, **caractérisée en ce qu'**une bague d'écartement (23, 24) reposant sur le côté intérieur de l'oeil de réception (3) et/ou une bague d'écartement enfichée sur le boulon de palier (3) est disposée respectivement entre un côté frontal de la douille articulée (4) et une douille métallique et en élastomère (5, 6) contiguë ou
**en ce qu'**avec une fonction d'appui correspondante, le tube de tôle extérieur (8) de la douille articulée (4) est prolongé axialement des deux côtés pour la réalisation de bagues d'écartement intégrées (23', 24'), ou
**en ce qu'**avec une fonction d'appui correspondante, les coques de tôle extérieure (18) des douilles métalliques et en élastomère (5, 6) sont prolongées respectivement axialement vers le côté frontal contigu de la douille articulée (4) pour la réalisation de parties de bague d'écartement (23") intégrées.

11. Articulation selon l'une quelconque des revendications 1 à 10, **caractérisée en ce que** des circlips (26) sont montés en guise de blocage de position axial et éventuellement de blocage de rotation dans la zone des côtés frontaux axialement extérieurs des douilles métalliques et en élastomère (5, 6) et/ou l'oeil de réception (3) y est rabattu radialement à l'intérieur au moins dans des zones partielles et/ou les coques de tôle extérieures (18) des douilles métalliques et en élastomère (5, 6) y sont rabattues en biseau radialement à l'extérieur au moins dans des zones partielles sur l'oeil de réception (3).

12. Bus à plateforme pivotante présentant une articulation selon l'une quelconque des revendications 1 à 11, **caractérisé en ce que** le bus à plateforme pivotante présente un wagon avant et un wagon arrière, et une plateforme pivotante est fixement reliée à l'une des deux parties de wagon,
**en ce que** l'autre partie de wagon est reliée au milieu dans le sens longitudinal du bus à plateforme pivotante par l'articulation (1) à la plateforme pivotante, sachant que l'axe de l'articulation se situe horizontalement dans un plan transversal du véhicule et les coques de couche d'élastomère (16, 17) des deux douilles métalliques et en élastomère (5, 6) sont orientées dans le sens de la marche.
